# EUROPÄISCHE PATENTSCHRIFT

(11) **EP 3 423 383 B1**
(45) Veröffentlichungstag und Bekanntmachung des Hinweises auf die Patenterteilung: **19.10.2022**
(21) Anmeldenummer: 17713896.3
(22) Anmeldetag: 01.03.2017
(51) Int. Cl.: B65G 27/04

(54) **SCHWINGFÖRDERER MIT EINEM DURCH EINE FLEXIBLE MATTE GEBILDETEN FÖRDERTROG**
VIBRATORY CONVEYOR WITH A CONVEYOR TROUGH WHICH IS MADE OF A FLEXIBLE MAT
TRANSPORTEUR OSCILLANT ÉQUIPÉ D'UN AUGET FORMÉ PAR UN TAPIS FLEXIBLE

(30) Priorität: 03.03.2016 DE 102016103803
(43) Veröffentlichungstag der Anmeldung: 09.01.2019
(73) Patentinhaber: Spaleck GmbH & Co. Kommanditgesellschaft, 46397 Bocholt (DE)
(72) Erfinder: HALLADIN, Jörg, 46397 Bocholt (DE); STENING, Frederik, 48720 Rosendahl (DE); LAKE, Christian, 46399 Bocholt (DE); TETIET, Stefan, 46395 Bocholt (DE)
(74) Vertreter: Schulze Horn, Kathrin
(86) Internationale Anmeldenummer: PCT/EP2017/054786
(87) Internationale Veröffentlichungsnummer: WO 2017/149021

(56) Entgegenhaltungen:
- EP-A1- 2 835 183
- DE-C1- 10 003 172
- US-A- 4 064 051
- US-A- 4 787 502
- US-A1- 2005 274 653
- US-A1- 2013 126 398

## Beschreibung

Die Erfindung betrifft einen Schwingförderer mit einem Grundrahmen, mit einem am Grundrahmen gelagerten, mittels eines Schwingantriebs relativ zum Grundrahmen in Schwingbewegung versetzbaren Schwingrahmen und mit einem durch eine flexible geschlossene Matte gebildeten Fördertrog, wobei die den Fördertrog bildende flexible Matte an in Längsrichtung des Fördertroges gesehen voneinander beabstandeten Verbindungsstellen abwechselnd mit dem Grundrahmen und mit dem Schwingrahmen verbunden ist, wobei zwischen je zwei in Längsrichtung des Fördertroges einander benachbarten Verbindungsstellen je ein Mattenabschnitt liegt, wobei mittels des Schwingantriebs der Schwingrahmen relativ zum Grundrahmen in eine solche Schwingung versetzbar ist, dass einander in Längsrichtung des Fördertroges benachbarte Mattenabschnitte im Gegentakt abwechseln gespannt und entspannt werden, wobei die Verbindungsstellen an im Abstand zueinander quer zur Längsrichtung des Fördertroges verlaufenden Traversen liegen und wobei jeweils abwechselnd eine erste Traverse mit dem Grundrahmen und eine zweite Traverse mit dem Schwingrahmen verbunden ist.

Erste Schwingförderer der eingangs genannten Art sind aus der US 2013/126398 A1 und der US 2005/274653 A1 bekannt. Diese Schwingförderer besitzen einen Grundrahmen mit einem am Grundrahmen gelagerten, mittels eines Schwingantriebes relativ zum Grundrahmen in Schwingbewegung versetzbaren Schwingrahmen und mit einem durch eine flexible Matte gebildeten Fördertrog, wobei die den Fördertrog bildende flexible geschlossene Matte an in Längsrichtung des Fördertroges gesehen voneinander beabstandeten Verbindungsstellen abwechselnd mit dem Grundrahmen und mit dem Schwingrahmen verbunden ist, wobei zwischen je zwei in Längsrichtung des Fördertroges einander benachbarten Verbindungsstellen je ein Mattenabschnitt liegt und wobei mittels des Schwingantriebs der Schwingrahmen relativ zum Grundrahmen in eine solche Schwingrichtung versetzbar ist, dass einander in Längsrichtung des Fördertroges benachbarte Mattenabschnitte im Gegentakt abwechselnd gespannt und entspannt werden.

Ein weiterer Schwingförderer ist aus der US 4 482 046 A bekannt. Dieser Schwingförderer besitzt einen durchgehenden flexiblen Fördertrog, der an seinen Längsrändern an dem Schwingrahmen fixiert ist. Der Schwingrahmen ist mittels Hebeln und Federn an dem Grundrahmen gelagert und mittels des Schwingantriebs in Schwingungen versetzbar, wodurch der flexible Fördertrog seine statische Form verändert und eine Förderwirkung auf darauf befindliches Fördergut ausübt.

Noch ein weiterer Schwingförderer ist aus der US 5 375 694 A bekannt. Dieser Schwingförderer besitzt eine langgestreckte Membran als Fördertrog, die an ihren seitlichen Rändern durchgehend in dem Schwingrahmen eingeklemmt ist. Der Schwingrahmen ist in dem Grundrahmen schwingfähig gelagert und mittels des Schwingantriebs so in Schwingungen versetzbar, dass sich in der Membran stehende Wellen ausbilden, die eine Förderung des Fördergutes auf der Membran bewirken.

Als Problem hat sich bei derartigen Schwingförderern im praktischen Einsatz herausgestellt, dass sie keine Möglichkeit bieten, auf die Verteilung des Fördergutes im Fördertrog Einfluss zu nehmen. Nachteilig ist zudem, dass sich, je nach dem zu fördernden Fördergut, mehr oder weniger schnell auf der Oberfläche des Fördertroges eine anhaftende, zunehmend dicker werdende Fördergutschicht bildet, welche den Fördertrog zunehmend belastet und die Förderwirkung des Schwingförderers beeinträchtigt. Es ist daher erforderlich, die anhaftende Fördergutschicht regelmäßig zu entfernen, was praktisch nur manuell erfolgen kann und jeweils eine Stillsetzung des Schwingförderers erfordert.

Für die vorliegende Erfindung stellt sich daher die Aufgabe, einen Schwingförderer der eingangs genannten Art zu schaffen, bei dem die Möglichkeit besteht, auf die Verteilung des Fördergutes im Fördertrog Einfluss zu nehmen und bei dem unerwünschte Anhaftungen von Fördergut an der Fördertrogoberfläche vermieden oder zumindest deutlich vermindert werden.

Die Lösung der Aufgabe gelingt erfindungsgemäß mit einem Schwingförderer der eingangs genannten Art, der dadurch gekennzeichnet ist, dass wenigstens eine der in Querrichtung des Fördertroges verlaufenden Traversen ein in Höhenrichtung ausgeprägtes, mittiges Höhenprofil aufweist, welches in der Matte und im Fördertrog eine Verteilkontur bildet, die hier den Fördergutstrom auf der Matte in zwei seitliche Teilströme aufteilt.

Damit wird bei dem erfindungsgemäßen Schwingförderer die vorteilhafte Möglichkeit geschaffen, auf die Verteilung und/oder Führung des Fördergutes im Fördertrog in einer gewünschten Weise Einfluss zu nehmen. Vorteilhaft werden bei dem erfindungsgemäßen Schwingförderer außerdem durch das abwechselnde Spannen und Entspannen der Mattenabschnitte Bewegungen und Beschleunigungen erzeugt, die für eine Vermeidung oder wenigstens für eine deutliche Verminderung des unerwünschten Anhaftens von Fördergut oder Fördergutanteilen an der Oberfläche des Fördertroges sorgen. Gleichzeitig wird durch die erzeugten Bewegungen und Beschleunigungen der Mattenabschnitte eine wirksame Förderung des zu fördernden Förderguts erzielt. Eine Reinigung des Fördertroges ist bei dem erfindungsgemäßen Schwingförderer daher nicht mehr oder nur noch in wesentlich größeren Zeitabständen erforderlich, was unproduktive Stillstandszeiten verringert und die Wirtschaftlichkeit des Betriebes des Schwingförderers erhöht. Dadurch, dass die Verbindungsstellen an im Abstand zueinander quer zur Längsrichtung des Fördertroges verlaufenden Traversen liegen, wobei jeweils abwechselnd eine erste Traverse mit dem Grundrahmen und eine zweite Traverse mit dem Schwingrahmen verbunden ist, wird die Schwingbewegung des Schwingrahmens von den mit diesem verbundenen zweiten Traversen ebenfalls ausgeführt, sodass sich eine gewünschte Schwingbewegung der zweiten Traversen relativ zu den ersten, mit dem Grundrahmen verbundenen Traversen ergibt. Zudem wird die den Fördertrog bildende Matte durch die Traversen auch an ihrer Unterseite unterstützt, was die Matte entlastet und eine wesentlich längere Einsatzzeit der Matte erlaubt als bei einer nur an ihren Längsrändern gehaltenen Matte.

Weiter ist bevorzugt vorgesehen, dass der Schwingrahmen relativ zum Grundrahmen so schwingbeweglich gelagert ist, dass sich bei der durch den Schwingantrieb erzeugten Schwingbewegung des Schwingrahmens der Abstand der ersten und zweiten Traversen voreinander periodisch ändert. Mit anderen Worten ausgedrückt, verläuft hier die Schwingrichtung in Längsrichtung des Fördertroges, womit das gewünschte abwechselnde Spannen und Entspannen der Mattenabschnitte wirksam erzeugt wird.

Ergänzend kann der Schwingrahmen relativ zum Grundrahmen so schwingbeweglich gelagert sein, dass bei der durch den Schwingantrieb erzeugten Schwingbewegung des Schwingrahmens der periodischen Abstandsänderung der ersten und zweiten Traversen voneinander eine periodische Änderung der Höhenlage der ersten und zweiten Traversen relativ zueinander überlagert oder überlagerbar ist. Auf diese Weise kann die Förderwirkung, z. B. eine Fördergeschwindigkeit, des Schwingförderers beeinflusst werden.

Die ersten und zweiten Traversen können fest mit ihrem jeweils zugehörigen Rahmen verbunden sein, um eine besonders stabile und haltbare Anordnung zu schaffen. Alternativ können die Traversen auch lösbar an ihren Rahmen angebracht sein, um sie bei Bedarf, z. B. bei Änderungen der Förderaufgaben oder Förderguteigenschaften, leicht gegen anders bemaßte oder geformte Traversen austauschen zu können.

Eine gewünschte Schwingrichtung oder -ebene kann durch entsprechend ausgebildete und ausgerichtete federnde Verbindungselemente zwischen Grundrahmen und Schwingrahmen festgelegt werden.

In einer weiteren Ausgestaltung des Schwingförderers wird vorgeschlagen, dass die den Fördertrog bildende flexible Matte über mehrere oder alle Verbindungsstellen durchgehend ausgebildet ist. Hiermit wird ein über eine mehrere Verbindungsstellen übergreifende Länge oder über seine volle Länge stetig durchgehender Fördertrog gebildet.

Alternativ können die Mattenabschnitte der den Fördertrog bildenden flexiblen Matte separate, dicht aneinander anschließende, sich jeweils zwischen zwei einander benachbarten Verbindungsstellen erstreckende Mattenteilstücke sein. Diese Ausgestaltung bietet den Vorteil, dass bei Bedarf einzelne, beschädigte Mattenteilstücke leicht ausgetauscht werden können und nicht der gesamte Fördertrog erneuert werden muss.

Bevorzugt ist an einem Aufgabeende des Schwingförderers eine der mit dem Schwingrahmen verbundenen Traversen angeordnet. Hiermit wird Fördergutanhaftungen am Aufgabeende des Schwingförderers, wo häufig das Fördergut mit einer gewissen Fallgeschwindigkeit auf den Fördertrog trifft, besonders wirksam entgegengewirkt.

Um auf technisch möglichst günstige Art und Weise Fördergutverluste während eines Förderbetriebes des Schwingförderers zu vermeiden, wird vorgeschlagen, dass die den Fördertrog bildende flexible Matte an ihren Längsrändern nach oben hin gebogen ist. Dieses Aufbiegen der Längsränder der Matte oder der Mattenteilstücke ist aufgrund von deren Flexibilität problemlos möglich und beeinträchtigt auch nicht das abwechselnde Spannen und Entspannen der Mattenabschnitte.

Um eine Förderwirkung zu erzielen, genügt es grundsätzlich, dass nur der Schwingrahmen relativ zu dem Grundrahmen, der selbst nicht schwingt, in Schwingbewegung versetzt wird. Für manche Einsatzfälle des Schwingförderer kann es aber funktional günstig sein, wenn der Grundrahmen relativ zu einer Aufstellungsfläche des Schwingförderers schwingbeweglich angeordnet und der Grundrahmen durch den Schwingantrieb des Schwingrahmens oder durch einen eigenen Schwingantrieb in Schwingbewegung relativ zu der Aufstellungsfläche versetzbar ist. Hier werden also zwei Schwingbewegungen überlagert. Dabei sind zweckmäßig die Schwingbewegungen miteinander in einer geeigneten Weise gekoppelt, insbesondere phasengekoppelt, um eine wirksame Förderung von Fördergut zu gewährleisten.

Um den Schwingförderer an wechselnde Förderaufgaben und sich ändernde Förderguteigenschaften anpassen zu können, ist zweckmäßig der/jeder Schwingantrieb hinsichtlich der Schwingungsfrequenz und/oder der Schwingungsamplitude und/ oder der Schwingungsrichtung verstellbar. Geeignete Schwingantriebe sind an sich bekannt und können beispielsweise rotierende oder oszillierende Unwuchtmassen aufweisen oder elektromagnetisch oder pneumatisch oder hydraulisch arbeiten.

Um einen weiteren Beitrag zur Vermeidung von störenden Fördergutanhaftungen an der Fördertrogoberfläche zu leisten, besteht vorzugsweise die den Fördertrog bildende flexible Matte aus einem hinsichtlich des zu fördernden Förderguts nichthaftenden oder antihaftend beschichteten Kunststoff- oder Gummiwerkstoff.

Im Folgenden wird ein Ausführungsbeispiel des erfindungsgemäßen Schwingförderers anhand einer Zeichnung erläutert. Die Figuren der Zeichnung zeigen:
- Figur 1: einen Schwingförderer in einer schematischen Seitenansicht,
- Figur 2: den Schwingförderer aus Figur 1 in einer schematischen Draufsicht und
- Figur 3: den Schwingförderer aus Figur 1 in einer schematischen Ansicht auf seine in Figur 1 linke Stirnseite.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

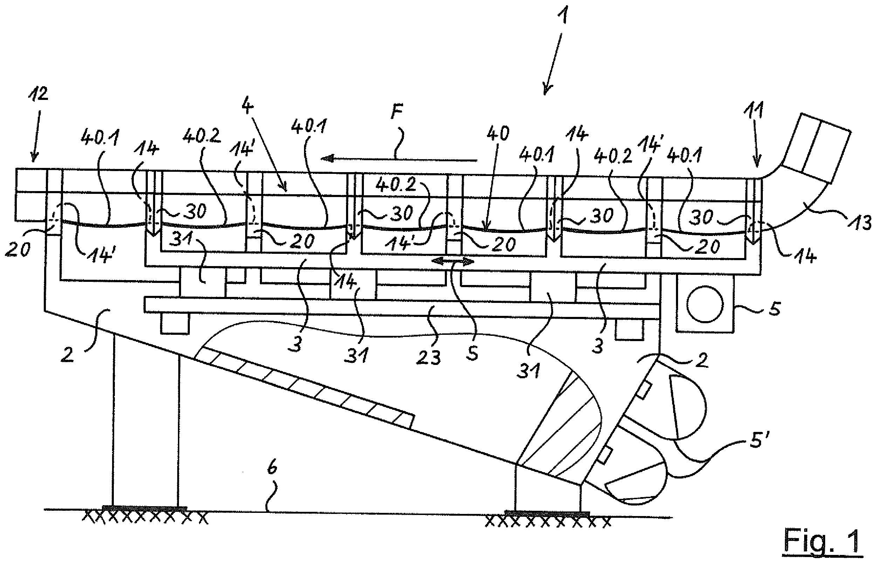

Figur 1 der Zeichnung zeigt einen Schwingförderer 1 in einer schematischen Seitenansicht. Der Schwingförderer 1 besitzt einen Grundrahmen 2, der auf einer Aufstellungsfläche 6, wie Fußboden eines Betriebsgebäudes, angeordnet ist. An seinen beiden Längsseiten weist der Grundrahmen 2 jeweils eine sich in Längsrichtung des Grundrahmens 2 erstreckende Konsole 23 auf, auf welchen in Abständen voneinander mehrere Federelemente 31 angeordnet sind.

Auf den Federelementen 31 liegt ein Schwingrahmen 3 auf, der relativ zu dem Grundrahmen 2 in der durch einen Doppelpfeil angedeuteten Schwingrichtung S relativ zu dem Grundrahmen 2 schwingbeweglich ist. Zur Erzeugung der Schwingbewegung des Schwingrahmens 3 dient ein Schwingantrieb 5, der an dem in Figur 1 rechten Endbereich des Schwingrahmens 3 angeordnet ist.

Mit dem Grundrahmen 2 sind in regelmäßigen Abständen in Längsrichtung des Grundrahmens 2 verteilt erste Traversen 20 verbunden, die in Querrichtung des Grundrahmens 2 verlaufen. Mit dem Schwingrahmen 3 sind, ebenfalls in regelmäßigen Abständen in Längsrichtung des Schwingrahmens 3 verteilt, zweite Traversen 30 verbunden. Dabei liegen die zweiten Traversen 30 jeweils etwa mittig zwischen zwei einander benachbarten ersten Traversen 20.

Mit den ersten Traversen 20 und zweiten Traversen 30 ist eine in Längsrichtung des Schwingförderers 1 verlaufende, einen Fördertrog 4 bildende Matte 40 verbunden. Dabei liegen jeweils Verbindungsstellen 14 an den zweiten Traversen 30 und Verbindungsstellen 14' an den ersten Traversen 20. Zwischen je zwei einander benachbarten Traversen 20, 30 liegt so jeweils abwechselnd ein Mattenabschnitt 40.1 und ein Mattenabschnitt 40.2.

Das in Figur 1 rechte Ende des Schwingförderers 1 bildet dessen Aufgabeende 11, an welchem zu förderndes Fördergut dem Fördertrog 4 des Schwingförderers 1 zugeführt wird. Die Matte 40 kann am Aufgabeende 11 nach außen weitergeführt und an eine das Fördergut zuführende Einrichtung angebunden sein und dort eine Art Zufuhrrutsche 13 für das auf dem Schwingförderer 1 weiter zu befördernde Fördergut bilden.

Das in Figur 1 linke Ende des Schwingförderers 1 bildet dessen Abgabeende 12, wo das mittels des Schwingförderers 1 beförderte Fördergut abgebbar ist, beispielsweise an eine weitere Fördereinrichtung oder an einen Sammel- oder Transportbehälter.

Im Betrieb des Schwingförderers 1 wird durch den Schwingantrieb 5 der Schwingrahmen 3 in eine Schwingbewegung in Schwingrichtung S relativ zu dem Grundrahmen 2 versetzt. Hierdurch werden die zweiten Traversen 30 relativ zu den ersten, unbewegten Traversen 20 in eine hin und her gehende Bewegung versetzt. Diese Schwingbewegung der zweiten Traversen 30 sorgt dafür, dass abwechselnd und im Gegentakt die Mattenabschnitte 40.1, 40.2 gespannt und entspannt werden. Dieses periodische Spannen und Entspannen der Mattenabschnitte 40.1, 40.2 erzeugt Bewegungen und Beschleunigungen, die für eine Förderung von Fördergut entlang des Fördertroges 4 in der durch den Pfeil F dargestellten Förderrichtung sorgen und die unerwünschte Anhaftungen von Fördergut an der Oberfläche der Matte 40 vermeiden.

In einer Abwandlung des Schwingförderers 1 kann zusätzlich dessen Grundrahmen 2 relativ zu der Aufstellungsfläche 6 schwingbeweglich angeordnet sein und dann mit einem eigenen Schwingantrieb 5' ebenfalls in Schwingungen versetzt werden, um die Förderwirkung des Schwingförderers 1 zu verstärken.

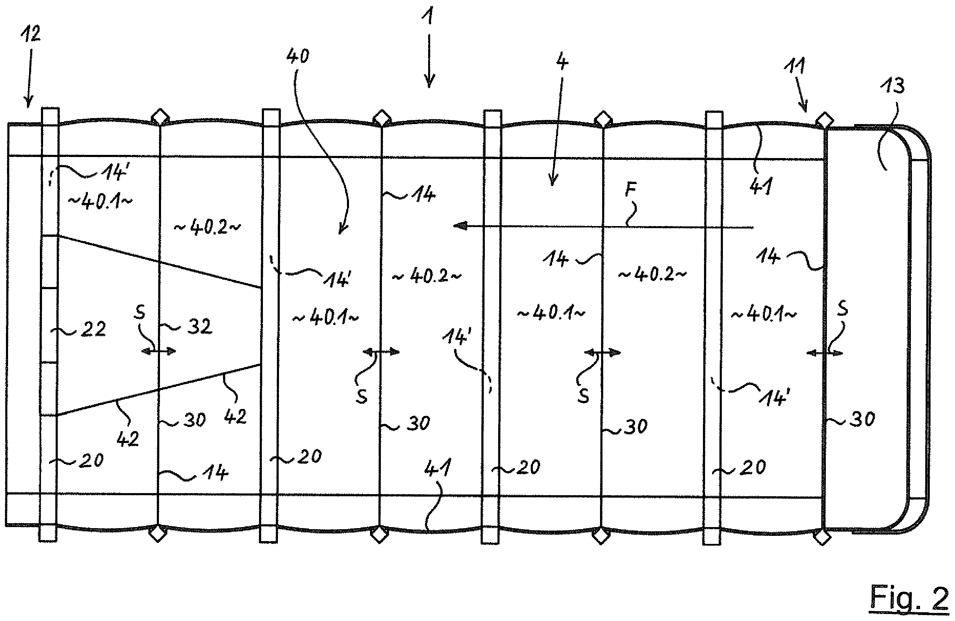

Figur 2 zeigt den Schwingförderer 1 aus Figur 1 in einer schematischen Draufsicht. Rechts in Figur 2 liegt das Aufgabeende 11 des Schwingförderers 1 mit der durch einen weitergeführten Abschnitt der Matte 40 gebildeten Zufuhrrutsche 13. Links in Figur 2 liegt das Abgabeende 12 des Schwingförderers 1.

In Längsrichtung und Förderrichtung F des Schwingförderers 1 gesehen verlaufen quer dazu jeweils abwechselnd die ersten Traversen 20 und zweiten Traversen 30, zu deren Sichtbarmachung hier die Matte 40 "durchsichtig" dargestellt ist. An den ersten Traversen 20 liegt jeweils eine Verbindungsstelle 14' und an den zweiten Traversen 30 liegt jeweils eine Verbindungsstelle 14, an denen die Matte 40 mit den jeweiligen Traversen 20, 30, zweckmäßig lösbar, verbunden ist.

Wie durch die jeweiligen Doppelpfeile S angedeutet ist, schwingen die zweiten Traversen 30 im Betrieb des Schwingförderers 1 in Längs- und Förderrichtung F des Schwingförderers 1 hin und her, wodurch sich der Abstand zwischen den ersten Traversen 20 und benachbarten zweiten Traversen 30 periodisch ändert. Dies bewirkt, dass die Mattenabschnitte 40.1, 40.2 abwechselnd und im Gegentakt gespannt und entspannt werden.

In dem in Figur 2 linken, dem Abgabeende 12 benachbarten Bereich des Schwingförderers 1 sind die dort angeordneten Traversen 20, 30 mit einem in Längsrichtung der Traversen 20, 30 verlaufenden Höhenprofil 22, 32 ausgebildet. Im dargestellten Beispiel haben die Traversen 20 und 30 in ihrem in Traversenlängsrichtung gesehen mittleren Bereich eine Erhöhung, wodurch eine Verteilkontur 42 in der über die Traversen 20, 30 verlaufenden Matte 40 und damit im Fördertrog 4 gebildet wird.

Oben und unten in Figur 2 ist jeweils ein hochgezogener Rand 41 der Matte 40 sichtbar, um einen zu den Seiten hin begrenzten Fördertrog 4 zu bilden und Verluste an Fördergut über die seitlichen Ränder der Matte 40 zu vermeiden.

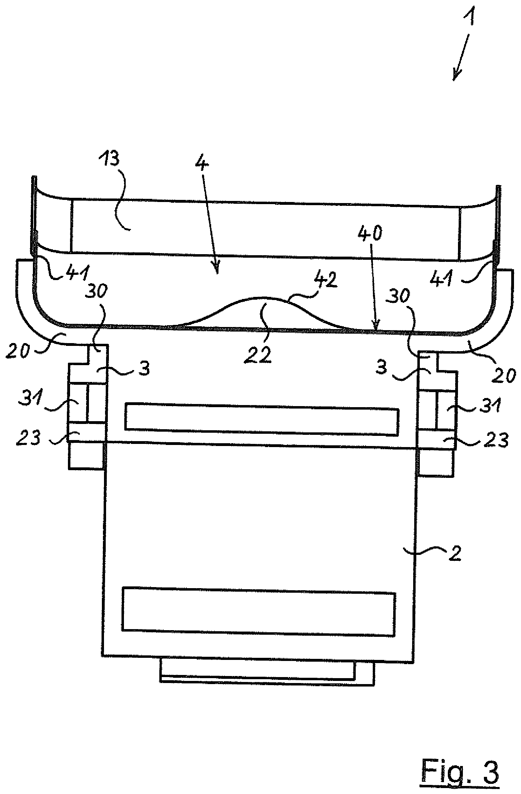

Figur 3 zeigt den Schwingförderer aus Figur 1 in einer schematischen Ansicht auf seine in Figur 1 linke Stirnseite. Unten in Figur 3 ist der Grundrahmen 2 mit seinen seitlichen Konsolen 23 sichtbar. Auf den Konsolen 23 sitzen die Federelemente 31, auf welche wiederum der Schwingrahmen 3 aufgesetzt ist. Die Federelemente 31 sind dabei so ausgestaltet, dass der Schwingrahmen 3 im Wesentlichen nur eine Bewegungsfreiheit in Längsrichtung des Schwingförderers 1 hat, gemäß Figur 3 also senkrecht zur Zeichnungsebene.

Weiterhin ist in Figur 3 die am Abgabeende des Schwingförderers 1 liegende, äußerste Traverse 20 sichtbar, die Teil des Grundrahmens 2 ist. Die weiteren Traversen 20, 30 sind in Figur 3 verdeckt und daher nicht sichtbar. Über der Traverse 20 ist die Matte 40, die den Fördertrog 4 des Schwingförderers 1 bildet, sichtbar. Links und rechts liegt jeweils ein hochgezogener Rand 41 der Matte 40. Wie Figur 3 veranschaulicht, unterstützt die Traverse 20, ebenso wie die weiteren Traversen 20, 30, die Matte 40 sowohl an ihrer Unterseite als auch außen an ihren hochgezogenen Rändern 41.

In Querrichtung des Schwingförderers 1 gesehen besitzt die Traverse 20 ein Höhenprofil 22 mit einer mittigen Erhebung, welche in der Matte 40 und im Fördertrog 4 eine Verteilkontur 42 bildet, die hier den Fördergutstrom auf der Matte 40 in zwei seitliche Teilströme aufteilt.

Im Hintergrund der Figur 3 ist schließlich noch die aufgabeseitige Zufuhrrutsche 13 sichtbar.

**Bezugszeichenliste:**

| Zeichen | Bezeichnung |
|---|---|
| 1 | Schwingförderer |
| 11 | Aufgabeende |
| 12 | Abgabeende |
| 13 | Zufuhrrutsche |
| 14, 14' | Verbindungsstellen |
| 2 | Grundrahmen |
| 20 | erste Traversen an 2 |
| 22 | Höhenprofil an 20 |
| 23 | Konsole |
| 3 | Schwingrahmen |
| 30 | zweite Traversen an 3 |
| 31 | Federelemente |
| 32 | Höhenprofil an 30 |
| 4 | Fördertrog |
| 40 | Matte |
| 40.1, 40.2 | Mattenabschnitte |
| 41 | hochgezogener Rand von 40 |
| 42 | Verteilkontur in 40 |
| 5, 5' | Schwingantrieb an 3, an 2 |
| 6 | Aufstellungsfläche für 1 |
| S | Schwingrichtung von 3 |
| F | Förderrichtung von 1 |

## Patentansprüche

1. Schwingförderer (1) mit einem Grundrahmen (2), mit einem am Grundrahmen (2) gelagerten, mittels eines Schwingantriebs (5) relativ zum Grundrahmen (2) in Schwingbewegung versetzbaren Schwingrahmen (3) und mit einem durch eine flexible geschlossene Matte (40) gebildeten Fördertrog (4), wobei die den Fördertrog (4) bildende flexible Matte (40) an in Längsrichtung des Fördertroges (4) gesehen voneinander beabstandeten Verbindungsstellen (14, 14') abwechselnd mit dem Grundrahmen (2) und mit dem Schwingrahmen (3) verbunden ist, wobei zwischen je zwei in Längsrichtung des Fördertroges (4) einander benachbarten Verbindungsstellen (14, 14') je ein Mattenabschnitt (40.1, 40.2) liegt, wobei mittels des Schwingantriebs (5) der Schwingrahmen (3) relativ zum Grundrahmen (2) in eine solche Schwingung versetzbar ist, dass einander in Längsrichtung des Fördertroges (4) benachbarte Mattenabschnitte (40.1, 40.2) im Gegentakt abwechseln gespannt und entspannt werden, wobei die Verbindungsstellen (14, 14') an im Abstand zueinander quer zur Längsrichtung des Fördertroges (4) verlaufenden Traversen (20, 30) liegen und wobei jeweils abwechselnd eine erste Traverse (20) mit dem Grundrahmen (2) und eine zweite Traverse (30) mit dem Schwingrahmen (3) verbunden ist,
**dadurch gekennzeichnet,**
**dass** wenigstens eine der in Querrichtung des Fördertroges (4) verlaufenden Traversen (20, 30) ein in Höhenrichtung ausgeprägtes, mittiges Höhenprofil (22, 32) aufweist, welches in der Matte (40) und im Fördertrog (4) eine Verteilkontur (42) bildet, die hier den Fördergutstrom auf der Matte (40) in zwei seitliche Teilströme aufteilt.

2. Schwingförderer nach Anspruch 1, **dadurch gekennzeichnet, dass** der Schwingrahmen (3) relativ zum Grundrahmen (2) so schwingbeweglich gelagert ist, dass sich bei der durch den Schwingantrieb (5) erzeugten Schwingbewegung des Schwingrahmens (3) der Abstand der ersten und zweiten Traversen (20, 30) voreinander periodisch ändert.

3. Schwingförderer nach Anspruch 2, **dadurch gekennzeichnet, dass** der Schwingrahmen (3) relativ zum Grundrahmen (2) so schwingbeweglich gelagert ist, dass bei der durch den Schwingantrieb (5) erzeugten Schwingbewegung des Schwingrahmens (3) der periodischen Abstandsänderung der ersten und zweiten Traversen (20, 30) voneinander eine periodische Änderung der Höhenlage der ersten und zweiten Traversen (20, 30) relativ zueinander überlagert oder überlagerbar ist.

4. Schwingförderer nach einem der Anspruch 1 bis 3, **dadurch gekennzeichnet, dass** die den Fördertrog (4) bildende flexible Matte (40) über mehrere oder alle Verbindungsstellen (14, 14') durchgehend ausgebildet ist.

5. Schwingförderer nach einem der Anspruch 1 bis 3, **dadurch gekennzeichnet, dass** die Mattenabschnitte (40.1, 40.2) der den Fördertrog (4) bildenden flexiblen Matte (40) separate, dicht aneinander anschließende, sich jeweils zwischen zwei einander benachbarten Verbindungsstellen (14, 14') erstreckende Mattenteilstücke sind.

6. Schwingförderer nach einem der Ansprüche 1 bis 5, **dadurch gekennzeichnet, dass** an einem Aufgabeende (11) des Schwingförderers (1) eine der mit dem Schwingrahmen (3) verbundenen Traversen (30) angeordnet ist.

7. Schwingförderer nach einem der Anspruch 1 bis 6, **dadurch gekennzeichnet, dass** die den Fördertrog (4) bildende flexible Matte (40) an ihren Längsrändern (41) nach oben hin gebogen ist.

8. Schwingförderer nach einem der Anspruch 1 bis 7, **dadurch gekennzeichnet, dass** der Grundrahmen (2) relativ zu einer Aufstellungsfläche (6) des Schwingförderers (1) schwingbeweglich angeordnet und durch den Schwingantrieb (5) des Schwingrahmens (3) oder durch einen eigenen Schwingantrieb (5') in Schwingbewegung relativ zu der Aufstellungsfläche (6) versetzbar ist.

9. Schwingförderer nach einem der Anspruch 1 bis 8, **dadurch gekennzeichnet, dass** der/jeder Schwingantrieb (5, 5') hinsichtlich der Schwingungsfrequenz und/oder der Schwingungsamplitude und/oder der Schwingungsrichtung verstellbar ist.

10. Schwingförderer nach einem der Anspruch 1 bis 9, **dadurch gekennzeichnet, dass** die den Fördertrog (4) bildende flexible Matte (40) aus einem hinsichtlich des zu fördernden Förderguts nichthaftenden oder antihaftend beschichteten Kunststoff- oder Gummiwerkstoff besteht.

## Claims

1. A vibratory conveyor (1) having a base frame (2), a vibratory frame (3) supported to the base frame (2), that can be set in vibratory motion relative to the base frame (2) by means of a vibratory drive (5), and having a conveyor trough (4) formed by a flexible closed mat (40),
wherein the flexible mat (40) forming the conveyor trough (4) is alternately connected to the base frame (2) and the vibratory frame (3) at, as seen in longitudinal direction of the conveyor trough (4), connection points (14, 14') that are spaced from each other, wherein between each two adjacent connection points (14, 14'), as seen in longitudinal direction of conveyor trough (4) there is one respective mat portion (40.1, 40.2), wherein by means of the vibratory drive (5) the vibratory frame (3) relative to the base frame (2) can be set in such a vibration that mat portions (40.1, 40.2) adjacent to each other in longitudinal direction of the conveyor trough (4) are alternately stretched and relaxed in opposite phase, wherein the connection points (14, 14') are on traverses (20, 30) being transversely to the longitudinal direction of the conveyor trough (4) at a distance to each other, and wherein a first traverse (20) is alternately connected to the base frame (2) and a second traverse (30) is connected to the vibratory frame (3),
**characterized in that**
at least one of the traverses (20, 30) being in transverse direction of the conveyor trough (4) includes a central height profile (22, 32) distinctive in height direction, which forms a distribution contour (42) in the mat (40) and in the conveyor trough (4), that here divides the stream of material to be conveyed on the mat (40) into two lateral sub-streams.

2. The vibratory conveyor of claim 1, **characterized in that** the vibratory frame (3) is supported vibratingly movable relative to the base frame (2) such that in the vibratory motion of the vibratory frame (3) created by the vibratory drive (5) the distance between the first and second traverses (20, 30) from each other changes periodically.

3. The vibratory conveyor of claim 2, **characterized in that** the vibratory frame (3) is vibratingly movably supported relative to the base frame (2) such that in the vibratory motion of the vibratory frame (3) created by the vibratory drive (5) of the change in the periodical distance of the first and second traverses (20, 30) from each other a periodic change of height of the first and second traverses (20, 30) relative to each other is superimposed or can be superimposed.

4. The vibratory conveyor of one of claims 1 to 3, **characterized in that** the flexible mat (40) forming the conveyor trough (4) is designed across several or all connection points (14, 14').

5. The vibratory conveyor of one of claims 1 to 3, **characterized in that** the mat portions (40.1, 40.2) of the flexible mat (40) forming the conveyor trough (4) are separate mat pieces closely adjoining each other, each extending between two adjacent connection points (14, 14').

6. The vibratory conveyor of one of claims 1 to 5, **characterized in that** on one feed end (11) of the vibratory conveyor (1) one of the traverses (30) connected to the vibratory frame (3) is arranged.

7. The vibratory conveyor of one of claims 1 to 6, **characterized in that** the flexible mat (40) forming the conveyor trough (4) is bent upwards on the longitudinal edges (41) thereof.

8. The vibratory conveyor of one of claims 1 to 7, **characterized in that** the base frame (2) is vibratingly movably arranged relative to an installation area (6) of the vibratory conveyor (1) and can be set in vibratory motion relative to the installation area (6) by the vibratory drive (5) of the vibratory frame (3) or by an own vibratory drive (5').

9. The vibratory conveyor of one of claims 1 to 8, **characterized in that** the/each vibratory drive (5, 5') is adjustable regarding vibration frequency and/or vibration amplitude and/or vibration direction.

10. The vibratory conveyor of one of claims 1 to 9, **characterized in that** the flexible mat (40) forming the conveyor trough (4) consists of a synthetic material or rubber material that is non-adhesively or anti-adhesively coated regarding the material to be conveyed.

## Revendications

1. Transporteur oscillant (1) équipé d'une structure de base (2), d'un cadre oscillant (3) monté sur ladite structure de base (2) et pouvant être mis en mouvement d'oscillation par rapport à la structure de base (2) au moyen d'un entraînement oscillant (5), et équipé d'un auget de transport (4) formé par un tapis souple fermé (40),
ledit tapis souple (40) formant l'auget de transport (4) étant relié, à des points de connexion (14, 14') espacés les uns des autres dans le sens longitudinal dudit auget de transport (4), en alternance à la structure de base (2) et au cadre oscillant (3), un tronçon de tapis (40.1, 40.2) se trouvant respectivement entre deux points de connexion (14, 14') voisins l'un de l'autre dans le sens longitudinal de l'auget de transport (4), le cadre oscillant (3) pouvant être mis, au moyen de l'entraînement oscillant (5), dans une oscillation par rapport à la structure de base (2) telle que des tronçons de tapis (40.1, 40.2) voisins les uns des autres dans le sens longitudinal de l'auget de transport (4) sont tendus et détendus alternativement à contretemps, les points de connexion (14, 14') reposant sur des traverses (20, 30) à la transversale du sens longitudinal de l'auget de transport (4) et espacées les unes des autres, et respectivement en alternance une première traverse (20) étant reliée à la structure de base (2) et une deuxième traverse (30) au cadre oscillant (3),
**caractérisé en ce**
**qu'**au moins l'une des traverses (20, 30) s'étendant à la transversale de l'auget de transport (4) présente un profil en hauteur (22, 32) central, prononcé en direction de la hauteur, qui forme dans le tapis (40) et dans l'auget de transport (4) un contour de répartition (42) divisant ici le flux de produit transporté sur le tapis (40) en deux flux partiels latéraux.

2. Transporteur oscillant selon la revendication 1, **caractérisé en ce que** le cadre oscillant (3) est monté de manière à pouvoir osciller par rapport à la structure de base (2) de telle sorte que, lors du mouvement oscillant du cadre oscillant (3) généré par l'entraînement oscillant (5), la distance des première et deuxième traverses (20, 30) l'une devant l'autre varie périodiquement.

3. Transporteur oscillant selon la revendication 2, **caractérisé en ce que** le cadre oscillant (3) est monté de manière à pouvoir osciller par rapport à la structure de base (2) de telle sorte que, lors du mouvement oscillant du cadre oscillant (3), généré par l'entraînement oscillant (5), une variation périodique de la position en hauteur des première et deuxième traverses (20, 30) l'une par rapport à l'autre est superposée ou peut être superposée à la variation périodique de la distance des première et deuxième traverses (20, 30) l'une par rapport à l'autre.

4. Transporteur oscillant selon l'une quelconque des revendications 1 à 3, **caractérisé en ce que** le tapis souple (40) formant l'auget de transport (4) est réalisé continu sur plusieurs ou sur tous les points de connexion (14, 14').

5. Transporteur oscillant selon l'une quelconque des revendications 1 à 3, **caractérisé en ce que** les tronçons de tapis (40.1, 40.2) du tapis souple (40) formant l'auget de transport (4) sont des portions partielles de tapis séparées, se raccordant étroitement les unes aux autres et s'étendant chacune entre deux points de connexion (14, 14') voisins l'un de l'autre.

6. Transporteur oscillant selon l'une quelconque des revendications 1 à 5, **caractérisée en ce que** l'une des traverses (30) reliées au cadre oscillant (3) est agencée à une extrémité de chargement (11) du transporteur oscillant (1).

7. Transporteur oscillant selon l'une quelconque des revendications 1 à 6, **caractérisé en ce que** le tapis souple (40) formant l'auget de transport (4) est courbé vers le haut au niveau de ses bords longitudinaux (41).

8. Transporteur oscillant selon l'une quelconque des revendications 1 à 7, **caractérisé en ce que** la structure de base (2) est agencée de manière à pouvoir osciller par rapport à une surface de dépose (6) du transporteur oscillant (1) et qu'elle peut être mise en mouvement d'oscillation par rapport à ladite surface de dépose (6) par le biais de l'entraînement oscillant (5) du cadre oscillant (3) ou par un entraînement oscillant (5') propre.

9. Transporteur oscillant selon l'une quelconque des revendications 1 à 8, **caractérisé en ce que** ledit/chaque entraînement oscillant (5, 5') peut être ajusté en ce qui concerne la fréquence d'oscillation et/ou l'amplitude d'oscillation et/ou le sens d'oscillation.

10. Transporteur oscillant selon l'une quelconque des revendications 1 à 9, **caractérisé en ce que** le tapis souple (40) formant l'auget de transport (4) est composé d'un matériau en plastique ou en caoutchouc non adhérent ou à revêtement anti-adhérent en ce qui concerne le produit à transporter.
